(19) Europäisches Patentamt
European Patent Office
Office européen des brevets

(11) EP 1 993 888 B1

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(21) Anmeldenummer: **07726415.8**

(22) Anmeldetag: **16.02.2007**

(51) Int Cl.:
**B60T 8/1755** (2006.01)     **B60T 8/88** (2006.01)

(86) Internationale Anmeldenummer:
**PCT/EP2007/051527**

(87) Internationale Veröffentlichungsnummer:
**WO 2007/101777 (13.09.2007 Gazette 2007/37)**

(54) **VERFAHREN UND VORRICHTUNG ZUM BEGRENZEN VON STELLEINGRIFFEN EINES FAHRZEUGREGLERS**

METHOD AND DEVICE FOR LIMITING ACTUATOR INTERVENTIONS OF A VEHICLE CONTROLLER

PROCEDE ET DISPOSITIF POUR LIMITER LES INTERVENTIONS DE REGLAGE D'UN REGULATEUR DE VEHICULE

(84) Benannte Vertragsstaaten:
**DE FR**

(30) Priorität: **03.03.2006 DE 102006009918**
**10.07.2006 DE 102006031766**

(43) Veröffentlichungstag der Anmeldung:
**26.11.2008 Patentblatt 2008/48**

(73) Patentinhaber: **Robert Bosch GmbH**
**70442 Stuttgart (DE)**

(72) Erfinder:
• **KNOOP, Michael**
**71638 Ludwigsburg (DE)**
• **KLIER, Willy**
**71404 Korb (DE)**

(56) Entgegenhaltungen:
**EP-A- 1 157 911      EP-A2- 1 281 591**
**WO-A-00/02754      DE-A1- 3 602 432**
**DE-A1- 19 705 619**

## Beschreibung

Stand der Technik

Die Erfindung betrifft ein Verfahren zum Begrenzen der Stelleingriffe eines Fahrzeugreglers gemäß dem Oberbegriff des Patentanspruchs 1, sowie eine entsprechende Vorrichtung gemäß dem Oberbegriff des Patentanspruchs 10.

Derartige Verfahren und Vorrichtung sind z.B. aus den Dokumenten DE 3602432, WO0002754, EP1281591 und DE 19705619 bekannt.

Fahrzeugregler, wie z.B. ESP, aber auch so genannte Fahrerassistenzsysteme wie z.B. ACC (Adaptive Cruise Control), greifen in besonderen Fahrsituationen, wenn das Fahrzeug z.B. über- bzw. untersteuert, automatisch in den Fahrbetrieb ein, um das Fahrzeug zu stabilisieren bzw. den Fahrer zu unterstützen. Dadurch wird ein Ausgleichs-Giermoment um die Hochachse des Fahrzeugs erzeugt, das der Gierbewegung des Fahrzeugs entgegen wirkt und das Fahrzeug wieder stabilisiert. Bei einem Systemfehler, der z.B. auf einem zufälligen Hardwarefehler beruhen kann, besteht die Gefahr, dass das System den aktuellen Fahrzustand falsch bewertet und möglicherweise einen fehlerhaften Stelleingriff erzeugt, der die Fahrsicherheit erheblich beeinträchtigen kann. Wegen der unmittelbaren Auswirkung auf das Fahrverhalten und insbesondere die Fahrsicherheit sind solche Fehlauslösungen besonders kritisch.

Um Fehlauslösungen in jedem Fall zu vermeiden, sind bekannte Fahrzeugregler gemäß einem umfassenden Sicherheitskonzept ausgelegt, das sowohl den physischen Aufbau des Systems als auch die Signalverarbeitung betrifft. In manchen Reglersystemen werden die Sensorsignale mit Schätzwerten, die anhand verschiedener mathematischer Modelle berechnet wurden, plausibilisiert. Darüber hinaus ist es bekannt, die Sensorsignale auch als solche zu plausibilisieren.

Die Zuverlässigkeit von Reglersystemen kann weiter verbessert werden, wenn die Eingriffe der Aktuatoren des Fahrzeugreglers, wie z.B. der Radbremsen und/oder eines Lenkstellers, auf bestimmte Maximalwerte begrenzt werden. Es ist beispielsweise bekannt, den Lenkeingriff eines aktiven Lenksystems auf einen Maximalwert zu begrenzen. Der Maximalwert ist in diesem Fall ein fester Wert und ist so bemessen, dass das Fahrzeug auch im Falle eines ungewollten Stelleingriffs und rechtzeitiger Fehlererkennung noch beherrschbar bleibt und nicht in eine sicherheitskritische Situation gerät. Um bei hohen Geschwindigkeiten eine Gefährdung der Fahrsicherheit auszuschließen, ist der Maximalwert sehr klein gewählt. Dies hat jedoch den Nachteil, dass das Sicherheitssystem (Überwachungs- und Plausibilisierungsfunktionen) bei mittleren und niedrigen Geschwindigkeiten, überdimensioniert ist. Der niedrige Maximalwert für den zulässigen Fehler beschränkt die Verfügbarkeit des Lenksystems.

Offenbarung der Erfindung

Es ist daher die Aufgabe der vorliegenden Erfindung, einen Fahrzeugregler zu schaffen, der im Normalbetrieb wesentlich effektiver in den Fahrbetrieb eingreift und dennoch bei Vorliegen eines Systemfehlers zuverlässig begrenzt wird.

Gelöst wird diese Aufgabe gemäß der Erfindung durch die im Patenanspruch 1 sowie im Patentanspruch 10 angegebenen Merkmale. Weitere Ausgestaltungen der Erfindung sind Gegenstand von Unteransprüchen.

Ein wesentlicher Aspekt der Erfindung besteht darin, für den Stelleingriff des Fahrzeugreglers keinen Maximalwert, sondern einen maximalen Aufbaugradienten vorzugeben und die Dynamik des Stelleingriffs auf diesen Wert zu begrenzen. Dieses Verfahren hat somit den wesentlichen Vorteil, dass ein Stelleingriff des Fahrzeugreglers bei fehlerfreiem Betrieb nur in seinem Aufbaugradienten und nicht in seinem Absolutwert direkt begrenzt wird. Der Betrag des maximalen Aufbaugradienten ist vorzugsweise so gewählt, dass die Wirkung des Fehleingriffs bis zum Zeitpunkt einer möglichen Gegenreaktion des Reglers oder bis zur vollständigen Kompensation des Fehleingriffs so gering ist, dass das Fahrzeug während dieser Zeit noch beherrschbar bleibt.

Der maximale Aufbaugradient ergibt sich erfindungsgemäß aus der Höhe eines maximal tolerierbaren Fehleingriffs (maximaler Fehleingriff), der für das Fahrzeug bzw. den Fahrer noch beherrschbar und akzeptabel ist, unter Berücksichtigung der Fehlererkennungszeit und der Reaktionszeit des Fahrzeugreglers auf einen Fehler. Dieser maximale Fehleingriff definiert also eine noch tolerierbare Beeinträchtigung des Fahrzeugs, die nicht überschritten werden darf, bis das Reglersystem den Fehler kompensiert oder zumindest auf den Fehler reagiert hat. Als Zustandsgröße für den maximalen Fehleingriff eignet sich beispielsweise ein Gierimpuls. Wenn ein Systemfehler, wie z.B. ein Sensorfehler oder ein Software-Fehler, festgestellt wird, wird der Stelleingriff vorzugsweise unmittelbar unterbrochen und der Aktuator wieder in den Ausgangszustand zurückgeführt.

Der maximal tolerierbare Fehleingriff ist als solches eine vom Fahrzeugtyp und Steller abhängige Größe, die z. B. anhand theoretischer Überlegungen oder Fahrsimulationen festgelegt werden kann. Zusätzlich sollte auch der subjektive Eindruck von Testfahrern ausgewertet werden.

Gemäß einer bevorzugten Ausführungsform der Erfindung wird zur Berechnung des maximalen Aufbaugradienten zunächst der Maximalwert einer Zustandsgröße, wie z.B. eines Gierimpulses oder einer Gierrate um die Hochachse des Fahrzeugs, bestimmt, der nicht überschritten werden sollte. Die Zustandsgröße beschreibt vorzugsweise die Reaktion des Fahrzeugs auf einen Stelleingriff. Dieser Wert (z. B. eine maximal zulässige Gierratenänderung) wird dann vorzugsweise in Stellgrößen für einen oder mehrere Aktuatoren des Fahrzeugreglers umgerechnet und daraus jeweils ein maximaler Aufbaugradient für den Stelleingriff der einzelnen Aktuatoren bestimmt. Bei einem Fahrzeugregler, der mittels mehrerer Aktuatoren in den Fahrbetrieb eingreift, kann die Dynamik der Regeleingriffe somit individuell begrenzt werden. Der Aufbaugradient eines Lenkstellers kann beispielsweise unterschiedlich zum Gradienten der Radbremsen eingestellt werden.

Nach dem Erkennen eines Fehlers im Reglersystem werden die Aktuatoren vorzugsweise mit maximalem Gradient wieder in den Ausgangszustand zurückgeführt. Der maximale Gradient ist dabei im Wesentlichen nur durch die Konstruktion bzw. das Ansprechverhalten der Aktuatoren bestimmt. Ein Fehleingriff kann somit in kürzester Zeit wieder kompensiert werden.

Die Beeinträchtigung des Fahrverhaltens durch einen Fehleingriff ist bei geringeren Fahrzeuggeschwindigkeiten üblicherweise weniger kritisch als bei hohen Geschwindigkeiten. Der maximale Aufbaugradient wird daher vorzugsweise abhängig vom aktuellen Fahrzustand, insbesondere von der Fahrzeuggeschwindigkeit, festgelegt und ist bei höheren Geschwindigkeiten vorzugsweise geringer als bei niedrigeren Geschwindigkeiten. Wahlweise könnte der Aufbaugradient auch abhängig vom Fahrbahnzustand, insbesondere vom Reibwert, oder einer anderen sicherheitsrelevanten Größe eingestellt werden. Das Verhalten des Reglersystems kann somit an unterschiedliche Fahrbedingungen, wie z.B. "Nässe" oder "Glatteis" adaptiert werden.

Ein erfindungsgemäß ausgelegter Fahrzeugregler umfasst vorzugsweise ein Steuergerät, in dem ein Regelalgorithmus hinterlegt ist, der wie vorstehend beschrieben arbeitet.

Kurze Beschreibung der Zeichnungen

Die Erfindung wird nachstehend anhand der beigefügten Zeichnungen beispielhaft näher erläutert. Es zeigen:

Fig. 1    den zeitlichen Ablauf eines Stör-Giermomentes und dessen Rückführung;

Fig. 2    eine schematische Blockdarstellung eines Fahrzeugreglersystems mit Stellbegrenzungen; und

Fig. 3    ein Blockschaltbild zur Darstellung der wesentlichen Verfahrensschritte eines Verfahrens zum Bestimmen eines maximalen Stellgradienten.

Ausführungsformen der Erfindung

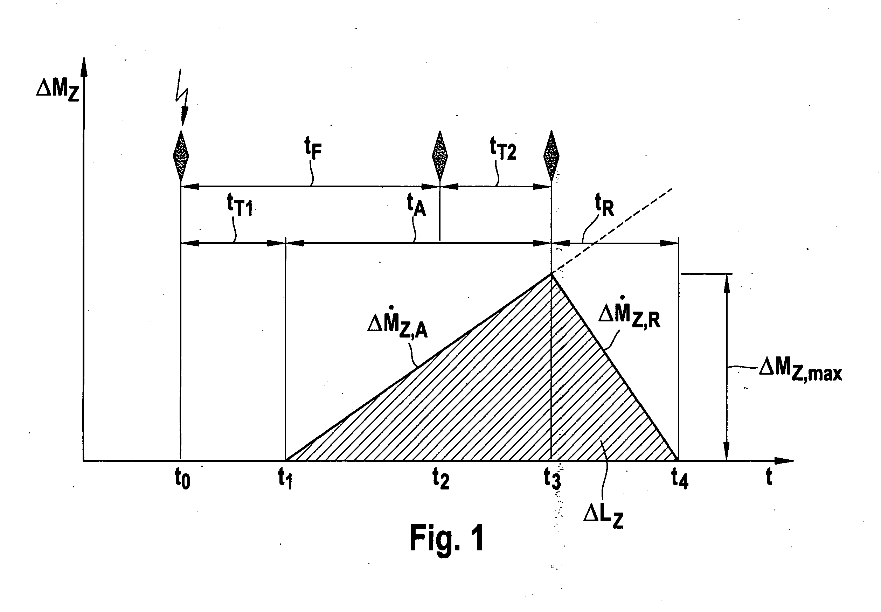

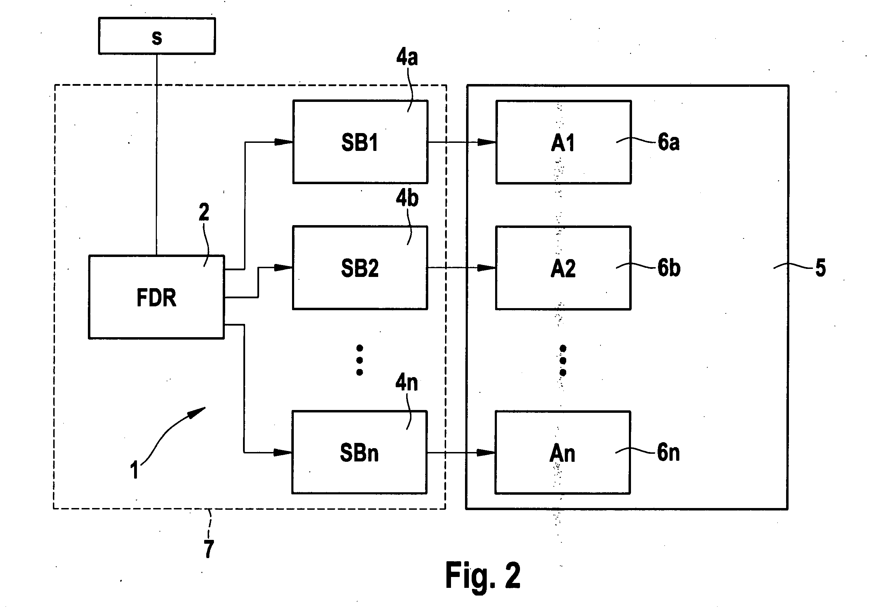

Fig. 1 zeigt den Verlauf eines Giermoments $\Delta M_z$ um die Hochachse eines Fahrzeugs, das durch einen fehlerhaften Stelleingriff eines Fahrzeugreglers 1 (siehe Fig. 2) verursacht wurde, und dessen Rückführung in den Ausgangszustand.

Im dargestellten Beispiel tritt zum Zeitpunkt $t_0$ ein Systemfehler auf, der einen Stelleingriff des Fahrzeugreglers 1 provoziert. Der Fahrzeugregler 1 erzeugt in Folge dessen eine fehlerhafte Stellanforderung, die mittels eines Aktuators, wie z.B. eines Lenkstellers und/oder der Fahrzeugbremsen umgesetzt wird. Nach einer gewissen Totzeit $t_{T1}$ baut sich dadurch ein zusätzliches Stör-Giermoment $\Delta M_z$ auf, das mit einem bestimmten Aufbaugradienten d/dt $\Delta M_{z,A}$ ansteigt.

Der Fehler wird erst zum Zeitpunkt $t_2$ entdeckt, wenn das fehlerhafte Giermoment $\Delta M_z$ bereits einen bestimmten Wert aufweist. Die Fehlererkennungszeit ist mit $t_F$ bezeichnet. Nach einer weiteren Totzeit $t_{T2}$, die durch die Verarbeitungsdauer des Regelalgorithmus und die Ansprechzeit des Aktuators bestimmt wird, beginnt ab dem Zeitpunkt $t_3$ die Rückführung des Stelleingriffs in den Ausgangszustand. Die Zeitdauer, in der sich das fehlerhafte Giermoment $\Delta M_z$ aufbaut, ist mit $t_A$ und die Rückführzeit mit $t_R$ bezeichnet.

Sofern im Beispiel von Fig.1 kein Fehler erkannt wird, baut sich das Giermoment $\Delta M_z$ weiter auf und folgt der in Fig.1 dargestellten gestrichelten Linie.

Um die Auswirkungen eines solchen fehlerhaften Stelleingriffs auf das Fahrzeug auf ein noch tolerierbares Maß zu begrenzen, wird hier der Aüfbaugradient d/dt $\Delta M_{z,A}$, mit dem sich das fehlerhafte Giermoment $\Delta M_z$ aufbaut, auf einen vorgegebenen Wert begrenzt. Der Stelleingriff wird unabhängig davon begrenzt, ob ein Fehler erkannt wird oder nicht.

Der maximale Aufbaugradient d/dt $\Delta M_{z,A}$ ergibt sich aus der Höhe eines maximal tolerierbaren Fehleingriffs $\Delta L_{z,krit}$, der für den Fahrer noch beherrschbar ist, und ist ferner abhängig von der Fehler-Reaktionszeit $(t_F+t_{T2})$ des Systems. Der Maximalwert $\Delta M_{z,krit}$ definiert eine noch tolerierbare Grenzbelastung für das Fahrzeug, die nicht überschritten werden sollte, bis der Fehleingriff kompensiert ist oder das Reglersystem zumindest auf den Fehler reagieren kann. Dadurch wird sichergestellt, dass das Fahrverhalten nicht übermäßig beeinträchtigt wird, auch wenn der Fehler erst nach einer maximalen Zeitdauer. Das Fahrzeug bleibt somit beherrschbar. Als Zustandsgröße zur Beschreibung der Fahrzeugbelastung eignet sich beispielsweise ein Gierimpuls $\Delta L_z$, also die schraffiert dargestellte Fläche unter dem Giermoment $\Delta M_z$.

Der maximal zulässige Grenzwert $\Delta L_{z,krit}$ ist grundsätzlich frei definierbar und wird durch Testreihen, bei denen Testfahrzeuge mit voreingestellten Fehlerbildern getestet werden und/oder durch Auswertung der subjektiven Beurteilung der Fahrer zu einzelnen Fehlerbildern, bestimmt.

Der maximale Aufbaugradient d/dt $\Delta M_{z,A}$ ist vorzugsweise auch abhängig vom aktuellen Fahrzustand, insbesondere der Fahrzeuggeschwindigkeit. Bei hohen Fahrzeuggeschwindigkeiten wirken sich fehlerhafte Stelleingriffe gravierender auf die Fahrsicherheit aus als bei niedrigeren Geschwindigkeiten, so dass der maximale Aufbaugradient d/dt $\Delta M_{z,A}$ bei hohen Geschwindigkeiten grundsätzlich kleiner eingestellt wird als bei niedrigen Geschwindigkeiten. Der maximale Aufbaugradient d/dt $\Delta M_{z,A}$ kann auch abhängig von anderen Fahrbedingungen, wie z.B. dem aktuellen Reibwert der Straße eingestellt werden. Dadurch kann die Fahrsicherheit auch bei schwierigen Verhältnissen, wie z.B. einer glatten Fahrbahn, aufrechterhalten werden.

Fig. 2 zeigt die Systemstruktur eines Fahrzeugreglers1,3,5 mit Stellbegrenzung der Regeleingriffe. Das Reglersystem umfasst in bekannter Weise ein Steuergerät 7 mit einem Regelalgorithmus 2, der bei Überschreiten einer bestimmten Regelabweichung mittels der Aktuatoren 6a-6n in den Fahrbetrieb eingreift. Je nach Ausführung des Fahrzeugreglers 1,3,5 können die Aktuatoren 6a-6n Radbremsen, einen Lenksteller, ein aktives Fahrwerk oder ein anderes Stellglied zur Beeinflussung des Fahrverhaltens umfassen.

Das Steuergerät 7 ist mit einer Sensorik 3 zur Überwachung des aktuellen Fahrzustands verbunden, deren Signale ausgewertet werden. Die Sensorik 3 kann beispielsweise einen Gierratensensor, Rad-Drehzahlsensoren, Beschleunigungssensoren, etc. enthalten.

Bei Überschreiten einer vorgegebenen Auslöseschwelle erzeugt der eigentliche Regelalgorithmus 2 Stellgrößen für die einzelnen Aktuatoren 6a-6n. Die Stellgrößen werden dann, wie vorstehend beschrieben, jeweils begrenzt, wie dies durch die Blöcke 4a-4n dargestellt ist.

Im Folgenden werden die wesentlichen Verfahrensschritte zum Begrenzen eines fehlerhaften Stelleingriffs und die zugehörigen mathematischen Algorithmen kurz erläutert:

Als Maß für die Wirkung eines fehlerhaften Stelleingriffs bietet sich insbesondere der Gierimpuls $\Delta L_z$, d.h. das Integral über das in Fig. 1 dargestellte fehlerhafte Giermoment $\Delta M_z$ an. Der Gierimpuls $\Delta L_z$ entspricht dabei der Fläche unter dem Giermoment $\Delta M_z$. Es gilt:

$$\Delta L_z = \int \Delta M_z dt \qquad\qquad (1)$$

Bei einem Fahrzeugregler, der mittels der Radbremsen und eines Lenkstellers in den Fahrbetrieb eingreift, setzt sich das resultierende Giermoment $\Delta M_z$ aus einem Anteil des Lenkstellers und einem Anteil der Radbremsen zusammen. Der Anteil des Lenkstellers $\Delta M_{z,lenk}$ ist dabei:

$$\Delta M_{z,Lenk} = C_V \, l_V \, \Delta\delta_V \qquad\qquad (2)$$

wobei $\delta_V$ der fehlerhafte Lenkwinkel, $C_V$ die Schräglaufsteifigkeit an der Vorderachse und $l_V$ der Abstand zwischen Vorderachse und Fahrzeugschwerpunkt ist.

Der Anteil des fehlerhaften Bremseingriffs $\Delta M_{z,brems}$ ergibt sich zu:

$$\Delta M_{z,Brems} = \pm \frac{b}{2\,r_R} C_P \, \Delta p_{Rad} \qquad\qquad (3)$$

wobei $\Delta_{Prad}$ die fehlerhafte Abweichung des Bremsdrucks an einem Rad, $C_p$ die Bremsverstärkung, b die Spurbreite und $r_R$ der Radradius ist.

Für andere Stellglieder lassen sich vergleichbare Giermomentenfehler $\Delta M_z$ angeben.

Die gesamte Störauswirkung ergibt sich damit zu:

$$\Delta M_z = \Delta M_{z,Brems} + \Delta M_{z,Lenk} \qquad\qquad (4)$$

Mit dem Summenwert $\Delta M_z$ bildet man gemäß Gleichung (1) den Gierimpulsfehler $\Delta L_z$. Der Gierimpulsfehler $\Delta L_z$ berechnet sich aus dem Aufbaugradienten $d/dt\, \Delta M_{z,A}$, dem Rückführgradienten $d/dt\, \Delta M_{z,R}$ und der Aufbauzeit $t_A$ gemäß:

$$\Delta L_z \;=\; \int \Delta M_z \, dt \;=\; \frac{1}{2} \Delta \dot{M}_{z,A} \cdot \left(1 + \frac{\Delta \dot{M}_{z,A}}{\Delta \dot{M}_{z,R}}\right) \cdot t_A^2 \qquad\qquad (5)$$

Ein Fehleingriff des Fahrzeugreglers 1,3,5 wird im vorliegenden Ausführungsbeispiel als sicherheitskritisch eingestuft, wenn der Gierimpulsfehler $\Delta L_z$ einen Maximalwert $\Delta L_{z,krit}$ überschreitet. Der Schwellenwert $\Delta L_{z,krit}$ kann dabei, wie Eingangs erwähnt, nach subjektiven (Fahrerbefragung) und/oder objektiven Kriterien (Fahrzeugkonstruktiön) festgelegt werden.

Für den maximal zulässigen Aufbaugradienten $d/dt\, \Delta M_{z,A}$ des Giermoments ergibt sich daraus:

$$\left|\Delta \dot{M}_{z,A}\right| \;\leq\; -\frac{\Delta \dot{M}_{z,R}}{2} \;+\; \sqrt{\frac{\Delta \dot{M}_{z,R}^2}{4} + \frac{2\,\Delta L_{z,krit}\,\Delta \dot{M}_{z,R}}{t_A^2}} \qquad\qquad (6)$$

Der maximal zulässige Aufbaugradient $d/dt\, \Delta M_{z,A}$ des Giermoments kann nun in maximal zulässige Gradienten für die Stellgrößen der einzelnen Aktuatoren 5 bzw. 6a-6n umgerechnet werden. Am Beispiel eines Fahrzeugreglers mit überlagerten Brems- und Lenkeingriffen ergibt sich der maximale Lenkwinkelgradient $d/dt\, \delta_{V,max}$ und der maximale Bremsdruckgradient $d/dt\, p_{rad,may}$ aus folgender Beziehung:

$$C_V\, l_V\, \left|\dot{\delta}_V\right| + \frac{b}{2\,r_R}\, C_P\, \left|\dot{p}_{Rad}\right| < \Delta \dot{M}_{z,A} \qquad\qquad (7)$$

Die relative Verteilung des Stelleingriffs auf die Radbremsen und den Lenksteller ist ein Entwurfsparameter und kann nach Wunsch gewählt werden.

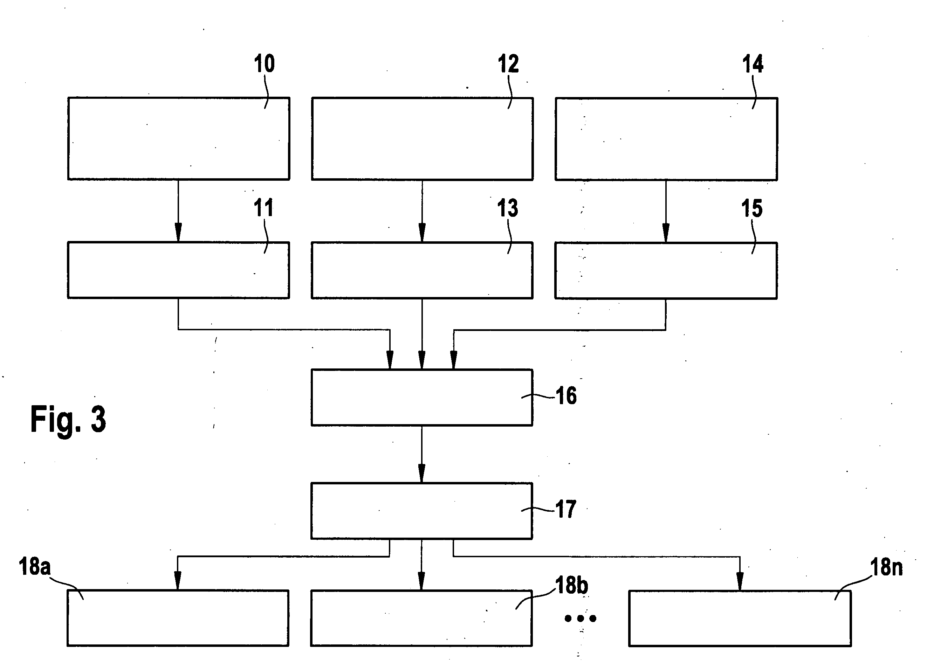

Fig. 3 zeigt die wesentlichen Verfahrensschritte zur Bestimmung der maximalen Stellgradienten $d/dt\, \delta_{V,max}$ und $d/dt\, p_{rad,may}$ nochmals in Form eines Blockdiagramms. Dabei wird in Schritt 11 zunächst ein Wert für den maximal zulässigen Gierimpulsfehler $\Delta L_{z,krit}$ in Abhängigkeit von der Reaktion des Fahrzeugs auf Stelleingriffe oder der subjektiven Beurteilung von Fahrern (Block 10) ermittelt. Außerdem wird in Block 13 der Rückführgradient $d/dt\, \Delta M_{z,R}$ des fehlerhaften Giermoments $\Delta M_z$ bestimmt, der im Wesentlichen durch die Leistungsfähigkeit der Aktuatoren 6a-6n bestimmt wird (Block 12). Die Fehlerentdeckungszeit $t_F$, die im Wesentlichen abhängig von der Leistungsfähigkeit der Überwachungsalgorithmen (Block 14) ist, wird außerdem in Block 15 ermittelt. Daraus wird in Block 16 der maximale Aufbaugradient $d/dt\, \Delta M_{z,A}$ des Giermoments $\Delta M_z$ berechnet. Bei einem Regelsystem mit mehreren Aktuatoren 6a-6n wird aus dem maximalen Aufbaugradienten $d/dt\, \Delta M_{z,A}$ des Giermoments $\Delta M_z$ jeweils ein Stellgradient für die einzelnen Aktuatoren 6a-6n ermittelt und der Stellgradient in den Blöcken 18a-18n auf den jeweiligen Maximalwert begrenzt.

Die erforderliche Sicherheitsintegrität des Systems kann nach den gültigen Normen nachgewiesen werden, indem der Abdeckungsgrad der Überwachungs- und Plausibilisierungsfunktionen bezüglich des maximal zulässigen fehlerhaften Giermomentes quantifiziert wird.

**Patentansprüche**

1. Verfahren zum Begrenzen des Stelleingriffs eines Fahrzeugreglers (1,3,5), der in bestimmten Fahrsituationen mittels wenigstens eines Aktuators (6a-6n) in den Fahrbetrieb eingreift, wobei ein maximaler Aufbaugradient ($d/dt\, \Delta M_z$, $d/dt\, \delta_v$, $d/dt\, p_{rad}$) für einen Stelleingriff des Fahrzeugreglers (1,3,5) bestimmt und der Stelleingriff auf diesen Wert begrenzt wird,
**dadurch gekennzeichnet, dass** ein maximaler Fehleingriff ($\Delta L_{z,krit}$) definiert wird, und der maximale Aufbaugradient ($d/dt\, \Delta M_z$, $d/dt\, \delta_v$, $d/dt\, p_{rad}$) abhängig vom maximalen Fehleingriff ($\Delta L_{z,krit}$) bestimmt wird

**2.** Verfahren nach Anspruch 1, **dadurch gekennzeichnet, dass** ein maximaler Aufbaugradient (d/dt $\Delta M_z$) für den Gesamt-Stelleingriff des Fahrzeugreglers (1,3,5) bestimmt und daraus jeweils Stellgradienten (d/dt $\delta_v$, d/dt $p_{rad}$) für einzelne Aktuatoren (6a-6n) des Fahrzeugreglers (1,3,5) bestimmt werden.

**3.** Verfahren nach Anspruch 1, **dadurch gekennzeichnet, dass** der maximale Fehleingriff ($\Delta M_{z,krit}$) eine Zustandsgröße ($L_z$), wie z. B. ein Gierimpuls ($\Delta L_z$) ist, die das fahrdynamische Verhalten des Fahrzeugs beschreibt.

**4.** Verfahren nach Anspruch 3, **dadurch gekennzeichnet, dass** die Zustandsgröße ein Gierimpuls ($\Delta L_z$), ein Giermoment ($\Delta M_z$) oder ein Gierrate bzw. die Änderung einer der vorstehend genannten Größen ist.

**5.** Verfahren nach einem der vorhergehenden Ansprüche, **dadurch gekennzeichnet, dass** der maximale Aufbaugradient (d/dt $\Delta M_z$, d/dt $\delta_v$, d/dt $p_{rad}$) abhängig von einer Fehlererkennungszeit ($t_F$) des Reglersystems (3,7) bestimmt wird.

**6.** Verfahren nach einem der vorhergehenden Ansprüche, **dadurch gekennzeichnet, dass** der maximale Aufbaugradient (d/dt $\Delta M_z$, d/dt $\delta_v$, d/dt $p_{rad}$) abhängig vom Rückführgradienten ($\Delta M_{z,R}$) bestimmt wird, mit dem ein fehlerhafter Stelleingriff in den Ausgangszustand zurückgeführt wird.

**7.** Verfahren nach Anspruch 6, **dadurch gekennzeichnet, dass** der Aktuator (6a-6n) mit maximalem Rückführgradienten ($\Delta M_{z,R}$) in den Ausgangszustand zurückgeführt wird.

**8.** Verfahren nach einem der vorhergehenden Ansprüche, **dadurch gekennzeichnet, dass** der maximale Aufbaugradient (d/dt $\Delta M_z$, d/dt $\delta_v$, d/dt $p_{rad}$) abhängig vom Fahrzustand, insbesondere von der Fahrzeuggeschwindigkeit, ermittelt wird.

**9.** Verfahren nach einem der vorhergehenden Ansprüche, **dadurch gekennzeichnet, dass** der Stelleingriff des bzw. der Aktuatoren (6a-6n) in den Ausgangszustand zurückgeführt wird, sobald ein Fehler im Reglersystem (3,7) erkannt wurde.

**10.** Vorrichtung zum Begrenzen des Stelleingriffs eines Fahrzeugreglers (1), insbesondere bei Vorliegen eines Fehlers im Reglersystem (3,7), **gekennzeichnet durch** eine Elektronik (7), die Mittel zur Durchführung eines der vorstehend beanspruchten Verfahren umfasst.

**Claims**

**1.** Method for limiting actuator interventions of a vehicle controller (1, 3, 5) which, in certain driving situations, engages in the driving operation by means of at least one actuator (6a-6n), wherein a maximum built-up gradient (d/dt $\Delta M_z$, d/dt $\delta_v$, d/dt $p_{wheel}$) is determined for an actuator intervention by the vehicle controller (1, 3, 5), and the actuator intervention is limited to this value,
**characterized in that** a maximum incorrect intervention ($\Delta L_{z,crit}$) is defined, and the maximum built-up gradient (d/dt $\Delta M_z$, d/dt $\delta_v$, d/dt $p_{wheel}$) is determined as a function of the maximum incorrect intervention ($\Delta L_{z,crit}$) .

**2.** Method according to Claim 1, **characterized in that** a maximum built-up gradient (d/dt $\Delta M_z$) for the overall actuator intervention by the vehicle controller (1, 3, 5) is determined, and actuator gradients (d/dt $\delta_v$, d/dt $p_{wheel}$) are determined for individual actuators (6a-6n) of the vehicle controller (1, 3, 5).

**3.** Method according to Claim 1, **characterized in that** the maximum incorrect intervention ($\Delta L_{z,crit}$) is a state variable ($L_z$), such as for example a yaw pulse ($\Delta L_z$), which describes the vehicle movement dynamics behaviour of the vehicle.

**4.** Method according to Claim 3, **characterized in that** the state variable is a yaw pulse ($\Delta L_z$), a yaw moment ($\Delta M_z$) or a yaw rate or the change in one of the abovementioned variables.

**5.** Method according to one of the preceding claims, **characterized in that** the maximum built-up gradient (d/dt $\Delta M_z$, d/dt $\delta_v$, d/dt $p_{wheel}$) is determined as a function of a fault detection time ($t_F$) of the controller system (3, 7).

**6.** Method according to one of the preceding claims, **characterized in that** the maximum built-up gradient (d/dt $\Delta M_z$, d/dt $\delta_v$, d/dt $p_{wheel}$) is determined as a function of the return gradient ($\Delta M_{z,R}$) with which a faulty actuator intervention is returned to the initial state.

7. Method according to Claim 6, **characterized in that** the actuator (6a-6n) is returned to the initial state with a maximum return gradient ($\Delta M_{z,R}$).

8. Method according to one of the preceding claims, **characterized in that** the maximum built-up gradient (d/dt $\Delta M_z$, d/dt $\delta_v$, d/dt $p_{wheel}$) is determined as a function of the driving state, in particular of the vehicle speed.

9. Method according to one of the preceding claims, **characterized in that** the actuator intervention of the actuator or actuators (6a-6n) is returned to the initial state as soon as a fault has been detected in the controller system (3, 7).

10. Device for limiting the actuator intervention by a vehicle controller (1), in particular when a fault is present in the controller system (3, 7), **characterized by** an electronics system (7) which comprises means for carrying out one of the methods claimed above.

**Revendications**

1. Procédé pour limiter l'intervention d'actionnement d'un régulateur (1, 3, 5) de véhicule qui intervient sur la conduite dans certaines situations de roulage au moyen d'au moins un actionneur (6a - 6n), un gradient maximal d'établissement (d/dt $\Delta M_z$, d/dt $\delta_v$, d/dt $p_{rad}$) étant défini pour une intervention d'actionnement du régulateur (1, 3, 5) du véhicule et l'intervention d'actionnement étant limitée à cette valeur, **caractérisé en ce que**
une intervention erronée maximale ($\Delta L_{z, krit}$) est définie et
**en ce que** le gradient maximal d'établissement (d/dt $\Delta M_z$, d/dt $\delta_v$, d/dt $p_{rad}$) est défini en fonction de l'intervention erronée maximale ($\Delta L_{z, krit}$).

2. Procédé selon la revendication 1, **caractérisé en ce qu'**un gradient maximal d'établissement (d/dt $\Delta M_z$) pour l'intervention d'actionnement totale du régulateur (1, 3, 5) du véhicule est déterminé et **en ce que** différents gradients d'actionnement (d/dt $\delta_v$, d/dt $p_{rad}$) sont définis en fonction de lui pour chacun des actionneurs (6a - 6n) du régulateur (1, 3, 5) du véhicule.

3. Procédé selon la revendication 1, **caractérisé en ce que** l'intervention erronée maximale ($\Delta L_{z, krit}$) décrit une grandeur d'état ($L_z$), par exemple une impulsion de lacet ($\Delta L_z$) qui décrit le comportement dynamique de roulage du véhicule.

4. Procédé selon la revendication 3, **caractérisé en ce que** la grandeur d'état est une impulsion de lacet ($\Delta L_z$), un couple de lacet ($\Delta M_z$), une vitesse de lacet ou une modification des grandeurs citées ci-dessus.

5. Procédé selon l'une des revendications précédentes, **caractérisé en ce que** le gradient maximal d'établissement (d/dt $\Delta M_z$, d/dt $\delta_v$, d/dt $p_{rad}$) est défini en fonction d'une durée ($t_F$) de détection d'erreur du système (3, 7) du régulateur.

6. Procédé selon l'une des revendications précédentes, **caractérisé en ce que** le gradient maximal d'établissement (d/dt $\Delta M_z$, d/dt $\delta_v$, d/dt $p_{rad}$) est défini en fonction du gradient de rétroaction ($\Delta M_{z, R}$) par lequel une intervention erronée d'actionnement rétroagit sur l'état initial.

7. Procédé selon la revendication 6, **caractérisé en ce que** l'actionneur (6a - 6n) est ramené dans l'état initial au gradient maximal de rétroaction ($\Delta M_{z, R}$).

8. Procédé selon l'une des revendications précédentes, **caractérisé en ce que** le gradient maximal d'établissement (d/dt $\Delta M_z$, d/dt $\delta_v$, d/dt $p_{rad}$) est déterminé en fonction de l'état de roulage et en particulier en fonction de la vitesse du véhicule.

9. Procédé selon l'une des revendications précédentes, **caractérisé en ce que** l'intervention d'actionnement du ou des actionneurs (6a - 6n) est ramenée à l'état initial dès qu'un défaut a été détecté dans le système (3, 7) de régulateur.

10. Dispositif de limitation de l'intervention d'actionnement d'un régulateur (1) d'un véhicule, en particulier en cas de présence d'un défaut dans le système (3, 7) du régulateur, **caractérisé par** une électronique (7) qui comporte des moyens en vue d'exécuter l'un des procédés revendiqués plus haut.

**Fig. 1**

**Fig. 2**

Fig. 3

EP 1 993 888 B1

**IN DER BESCHREIBUNG AUFGEFÜHRTE DOKUMENTE**

**In der Beschreibung aufgeführte Patentdokumente**

- DE 3602432
- WO 0002754 A
- EP 1281591 A
- DE 19705619